# FASCICULE DE BREVET EUROPEEN

(11) **EP 1 894 442 B1**
(45) Date de publication et mention de la délivrance du brevet: **20.02.2019**
(21) Numéro de dépôt: 06743799.6
(22) Date de dépôt: 11.04.2006
(51) Int. Cl.: H05B 6/02, B29C 35/08

(54) **DISPOSITIF DE CHAUFFAGE PAR INDUCTION ET PROCEDE DE FABRICATION DE PIECES A L'AIDE D'UN TEL DISPOSITIF**
INDUKIVE HEIZVORRICHTUNG UND VEFAHREN VON HERSTELLUNG VON WERKSTÜCKEN MITTELS DERGLEICHEN
INDUCTION HEATING DEVICE AND METHOD FOR MAKING PARTS USING SAME

(30) Priorité: 22.06.2005 FR 0551717
(43) Date de publication de la demande: 05.03.2008
(73) Titulaire: Roctool, 73370 Le Bourget du Lac (FR)
(72) Inventeur: GUICHARD, Alexandre, F-73310 La Chapelle du Mont du Chat (FR); FEIGENBLUM, José, F-38000 Grenoble (FR)
(74) Mandataire: Ipside
(86) Numéro de dépôt international: PCT/FR2006/050338
(87) Numéro de publication internationale: WO 2006/136743

(56) Documents cités:
- US-A- 5 483 043
- US-A- 5 571 436
- US-A1- 2004 256 382

## Description

L'invention est relative à un procédé et à un dispositif de chauffage par induction de surface métallique notamment afin de réaliser un moulage ou transformation, en particulier de matériaux composites à matrice thermoplastique ou thermodurcissable.

Pour chauffer une surface métallique en vue de réaliser notamment un moulage de pièce plastique ou composite, il est connu de noyer des fils inducteurs dans un volume de résine ou analogue dont la surface à chauffer comporte une plaque en matériau magnétique, cette plaque étant dénommée « suscepteur ». Le chauffage est obtenu par un couplage électromagnétique entre les inducteurs et la plaque magnétique.

Cette technologie présente des inconvénients majeurs qui la rendent difficilement exploitable. En effet, le chauffage du suscepteur n'est pas homogène car il est maximum au droit de chaque fil inducteur et diminue entre ces emplacements. En outre, la résine étant un isolant thermique, le refroidissement nécessaire entre deux cycles d'utilisation n'est pas aisé à réaliser. Par ailleurs, les cycles de chauffage et de refroidissement peuvent altérer les propriétés mécaniques de cette résine. Enfin, une résine présente une faible résistance aux chocs.

L'invention remédie à ces inconvénients.

Le document US 2004/0256382 divulgue un dispositif de chauffage d'un conduit destiné à transporter un matériau, en l'occurence un métal vers un moule, de sorte que les surface chauffantes décrites dans ce document ne sont pas destinées à conférer une forme à une pièce.

Les document US 5 571 436 décrit, un dispositif de chauffage direct d'une pièce par induction les corps de moule étant constitués d'un matériau non susceptible de chauffage par induction.

Le document US 5 483 043 décrit un dispositif pour le chauffage direct par induction d'une pièce comprenant des fibres sensibles à l'induction.

Le dispositif selon l'invention comporte un corps présentant au moins une partie en matériau magnétique et conducteur de la chaleur, avec une pluralité de cavités fermées à proximité de la surface à chauffer, chaque cavité entourant un inducteur, la chaleur produite par induction sur les parois de la cavité étant transférée par conduction vers la surface chauffante, la distance entre cavités et la position de ces cavités par rapport à la surface chauffante étant telles que le chauffage soit sensiblement uniforme sur la surface.

Le matériau magnétique et conducteur est, par exemple, de l'acier.

Ainsi, le chauffage de la surface est uniforme, le rendement est élevé puisque le couplage entre chaque inducteur et la cavité correspondante est optimum, la cavité entourant complètement l'inducteur. En outre, le matériau du corps de la surface de chauffe peut être moins sensible au vieillissement qu'une résine.

Le matériau magnétique constituant le corps de dispositif étant un conducteur thermique, le refroidissement peut être réalisé de façon efficace.

Dans une réalisation, pour minimiser les pertes thermiques par conduction à l'opposé de la surface de chauffe, la partie du corps se trouvant à l'opposé de la surface à chauffer par rapport aux cavités est en un matériau non magnétique.

Dans une réalisation, les cavités se présentent sous forme de rainures en deux parties du corps, la première partie, qui se termine par la surface à chauffer, étant en matériau magnétique et la seconde partie, à l'opposé de la surface, étant par exemple en matériau non magnétique.

Les rainures, et donc les cavités, peuvent présenter une section quelconque, par exemple une section circulaire ou une section carrée ou rectangulaire.

Dans une réalisation, pour le refroidissement entre deux cycles de chauffe de la surface, on prévoit des canaux destinés à être parcourus par un fluide de refroidissement, ces canaux se trouvant entre les cavités et la surface chauffante. Ces canaux ont par exemple une direction parallèle aux cavités. En variante, ils ont une direction perpendiculaire à ces cavités.

Selon un mode de réalisation, chaque inducteur a une forme tubulaire dont le canal central sert à la circulation d'un fluide de refroidissement. Ce refroidissement des inducteurs peut également servir au refroidissement du corps du dispositif entre deux cycles de chauffage.

En variante, le tube inducteur est, de préférence, recouvert d'un isolant sur sa surface externe et la surface externe du tube, éventuellement la surface externe de l'isolant, est à distance de la paroi interne de la cavité de façon à ménager un espace annulaire pour la circulation d'un autre fluide de refroidissement destiné à refroidir le corps entre deux cycles de chauffage. Ainsi, avec cette réalisation, l'encombrement des moyens de refroidissement est minimisé. En outre, le positionnement des inducteurs dans leur cavité s'effectue de façon aisée.

Avec cette dernière réalisation, les pertes thermiques sont minimisées car, lors du chauffage par induction, l'air séparant les parois de la cavité de l'inducteur constitue un isolant thermique, le fluide de refroidissement entre deux cycles ne circulant bien entendu pas lors de cette phase de chauffage.

Dans une autre réalisation, l'espace séparant chaque inducteur de la paroi interne de la cavité est rempli entièrement par un isolant électrique.

Dans une réalisation, un appareil de chauffage comporte deux dispositifs du type défini ci-dessus, par exemple l'un forme une matrice et l'autre forme un poinçon. Les deux dispositifs peuvent être alimentés de façon telle que leurs températures soient différentes, par exemple pour réaliser des états de surface différents sur une même pièce.

Les surfaces à mouler peuvent présenter une surface quelconque.

L'invention concerne aussi un procédé de fabrication de pièces par moulage ou transformation à l'aide d'au moins une surface chauffante faisant appel à un dispositif tel que défini ci-dessus. Elle concerne aussi un procédé de fabrication de pièces par moulage ou transformation à l'aide d'un appareil comportant au moins deux de ces dispositifs.

D'autres caractéristiques et avantages de l'invention apparaîtront avec la description de certains de ses modes de réalisation, celle-ci étant effectuée en se référant aux dessins ci-annexés sur lesquels :
la figure 1 est un schéma d'un dispositif selon l'invention,
la figure la montre une partie du dispositif représenté sur la figure 1,
la figure 2 est une vue de dessus d'un dispositif montré sur la figure 1,
la figure 3 est un schéma montrant une variante de réalisation des moyens de refroidissement pour le dispositif représenté sur la figure 1, et
les figures 4, 5 et 6 sont des schémas d'exemples de moules conformes à l'invention.

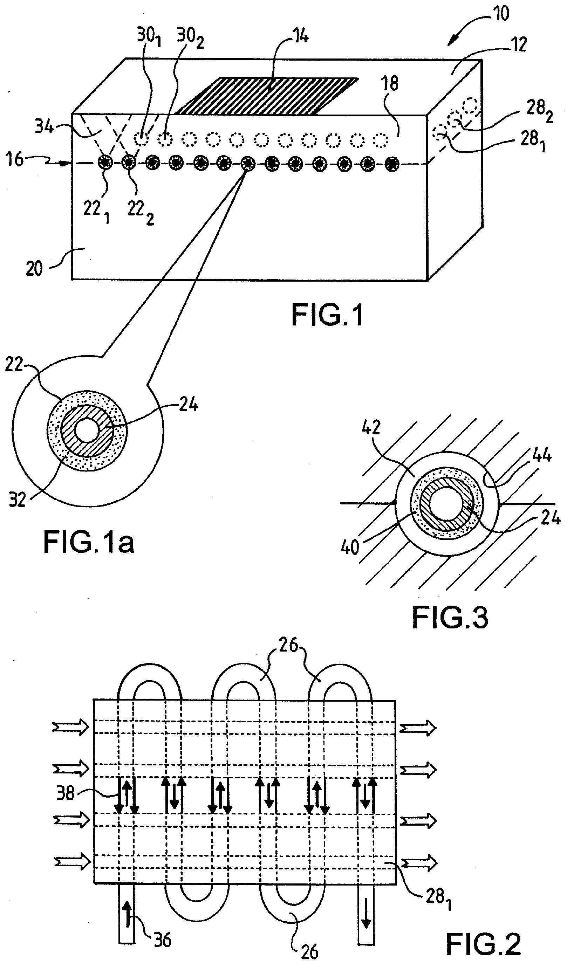

Dans l'exemple représenté sur la figure 1, le dispositif 10 constitue la demi-partie d'un moule pour la mise en forme et/ou la transformation d'une pièce par chauffage. Ainsi, dans cet exemple, le dispositif 10 forme la partie inférieure d'un moule dont la partie supérieure n'est pas représentée.

Dans ce dispositif 10, il est donc nécessaire de chauffer la face supérieure 12 afin de transformer ou mouler une pièce 14.

Selon l'invention, pour chauffer la surface 12, le dispositif 10 comporte un corps 16 qui, dans l'exemple, présente deux parties, respectivement, 18 et 20. Ces deux parties sont en acier. La partie 18 est en acier magnétique tandis que la partie 20 est un matériau amagnétique, par exemple également en acier.

La partie 18 en matériau magnétique est celle qui comporte la surface chauffante 12. A la partie inférieure de cette partie 18, de forme générale parallélépipédique dans l'exemple, on prévoit des rainures de sections circulaires, carrées, ou rectangulaires auxquelles correspondent des rainures identiques de la partie 20 du corps 16. Ainsi, quand les parties 18 et 20 sont assemblées comme montré, les rainures forment des canaux ou cavités 22₁, 22₂, etc. dont chacun (e) est destiné (e) à loger un conducteur électrique 24, par exemple en cuivre, qui, pour le chauffage, est parcouru par un courant alternatif à haute fréquence, par exemple une fréquence comprise entre 100 et 200 KHz, afin d'induire un champ électromagnétique.

Comme montré sur la figure 2, les divers conducteurs 24 sont reliés les uns aux autres par des cavaliers 26.

Dans l'exemple montré sur la figure 1 et la figure 2, la partie magnétique 18 du corps 16 est traversée par des canaux 28₁, 28₂, etc. de direction générale perpendiculaire aux canaux 22₁, 22₂. Ces canaux 28₁, 28₂, ..., sont destinés à recevoir un fluide de refroidissement entre deux cycles de chauffage. En variante, on prévoit des canaux de refroidissement 30₁, 30₂ de direction sensiblement parallèle aux cavités 22₁, 22₂, etc.

Dans une autre variante, qui sera décrite plus loin avec la figure 3, le refroidissement est réalisé dans les cavités 22.

Dans l'exemple représenté sur les figures 1 et la, le conducteur 24 est de forme tubulaire pour faire circuler un fluide de refroidissement de ce conducteur et est isolé des parois internes de la cavité 22 par une couche annulaire et isolante 32.

Le fonctionnement est le suivant :
Le courant à haute fréquence dont l'intensité est de l'ordre de 100 à 200 KHz, qui parcoure le conducteur 24, produit un champ électromagnétique qui, par couplage, échauffe les parois de la partie magnétique de la cavité. Le couplage est parfait puisque la cavité entoure complètement le conducteur. Ainsi, les pertes sont minimisées.

La chaleur produite sur les parois de la cavité se propage vers la surface 12 selon une zone 34 de diffusion de forme sensiblement cônique.

La distance des cavités à la surface 12 et la distance entre deux cavités adjacentes doivent être telles que, à la surface 12, les zones 34 de diffusion forment une intersection afin que la température de la surface 12 reste uniforme.

Cependant, la distance des cavités à la surface 12 ne doit pas être trop importante pour minimiser les pertes thermiques.

Les pertes thermiques vers l'arrière, c'est-à-dire dans la partie 20 du corps 16, sont minimisées car la chaleur produite est produite par la partie de la cavité qui est magnétique et non par la partie amagnétique.

Comme montré sur la figure 2, les courants inducteurs 36 induisent dans la cavité des courants 38 de sens contraire.

Dans la variante représentée sur la figure 3, pour optimiser le chauffage, on ne prévoit pas de conduits de refroidissement du type de ceux représentés sur la figure 1 mais le refroidissement est obtenu dans chaque cavité. Ainsi, les cavités 22 peuvent être plus proches de la surface 12 et il n'y a pas d'obstacle à la propagation de la chaleur vers la surface 12.

Le conducteur tubulaire 24 est recouvert d'une couche isolante 40 et la section de ce conducteur isolé est de dimension sensiblement inférieure à la section de la cavité 22. Ainsi, on ménage un espace annulaire 42 entre le conducteur 24 et la surface interne 44 de la cavité et dans cet espace annulaire 42, on fait circuler un fluide, notamment un liquide, pour le refroidissement du corps 16 entre deux cycles de chauffage.

Lors du chauffage, la zone annulaire 42 est remplie d'air, ce qui isole thermiquement la cavité du tube 24. En d'autres termes, la chaleur produite dans la partie 18 du corps 16 ne contribue pratiquement pas à échauffer le tube 24.

Dans une réalisation, la pièce 14 à traiter présente deux surfaces devant présenter des aspects différents. A cet effet, la partie supérieure du moule (non montrée) comporte un dispositif (non montré) analogue au dispositif 10 décrit ci-dessus avec une alimentation des inducteurs qui est différente de celle de l'alimentation des inducteurs du dispositif inférieur 10.

Ainsi, la température de chauffage des parties supérieure et inférieure peut être différente afin de conférer les états de surfaces différents.

Cette possibilité de températures différentes n'est, bien entendu, pas limitée à des états de surface différents. Il peut s'agir aussi, par exemple, de traiter des pièces en des matériaux différents sur une face et sur l'autre.

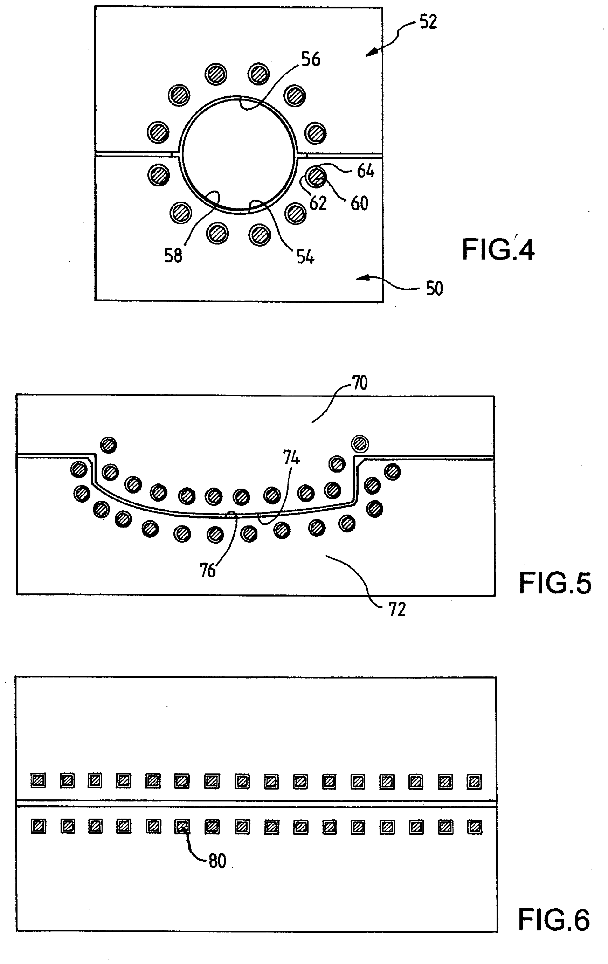

La figure 4 est une vue en coupe d'un moule, conforme à l'invention, destiné à réaliser un tube.

Ce moule comporte donc deux dispositifs 50 et 52 dont chacun présente une cavité semi-cylindrique, respectivement 54 et 56. Ces cavités sont chauffées comme décrit ci-dessus, en particulier comme décrit en relation avec les figures 1 et 3. Le matériau 58 à mettre en forme de tube par le chauffage est appliqué, grâce à de l'air comprimé, contre les parois 54, 56 chauffées par induction.

Dans chacun des dispositifs, les inducteurs sont répartis régulièrement dans un matériau magnétique autour des surfaces 54, 56. Chacun de ces inducteurs et les moyens de refroidissement du moule sont du type représenté sur la figure 3, c'est-à-dire que chaque conducteur en cuivre 60 est de forme tubulaire pour laisser circuler à l'intérieur un fluide de refroidissement et entre ce conducteur 60 et la cavité 62 en matériau magnétique est ménagé un espace annulaire 64 rempli d'air lors du moulage et dans lequel circule un fluide de refroidissement entre deux cycles de moulage.

La figure 5 est une vue analogue à celle de la figure 4 mais pour le moulage d'une pièce en matériau composite ayant, par exemple, la forme d'un élément d'une carrosserie d'automobile, tel qu'un capot. On prévoit, dans ce cas, un dispositif 70 formant poinçon et un autre dispositif 72 formant matrice. Les inducteurs sont répartis au voisinage des surfaces de moulage, respectivement, 74 et 76 de façon, comme déjà décrit, à obtenir des températures uniformes sur ces surfaces.

Enfin, la figure 6 représente un moule pour réaliser une plaque plane. Cette réalisation se distingue de celle montrée sur les figures 4 et 5 par le fait que les conducteurs 80 ont, dans ce cas, une section rectangulaire ou carrée et de même, les cavités ont une forme rectangulaire ou carrée en section.

## Revendications

1. Dispositif pour le chauffage par induction de la surface (12) d'un moule, dite surface chauffante, ladite surface chauffante conférant sa forme à une face de la pièce (14) transformée dans le moule, ledit moule comportant un corps (16) comprenant une partie (18) constituée d'un matériau magnétique et conducteur de la chaleur dans lequel est ménagée une pluralité de cavités (22, 62) fermées et distantes de la surface (12) chauffante, chaque cavité entourant un inducteur (24) alimenté électriquement par une source de courant alternatif à une fréquence comprise entre 100 kHz et 200 KHz, **caractérisé en ce que** la chaleur produite par induction sur les parois de chaque cavité étant transférée par conduction selon une zone de diffusion (34) sensiblement conique vers la surface (12) chauffante, la distance entre chaque cavité et la distance de ces cavités par rapport à la surface chauffante étant telles que les les zones (34) de diffusion de deux cavités (22₁, 22₂) adjacentes forment une intersection au niveau de la surface (12) chauffante, de sorte que la température résultant de ce chauffage soit sensiblement uniforme sur ladite surface chauffante.

2. Dispositif selon la revendication 1, comprenant des moyens de refroidissement pour refroidir la surface (12) chauffante.

3. Dispositif selon la revendication 1 dans lequel le matériau magnétique et conducteur de la chaleur comporte de l'acier.

4. Dispositif selon l'une des revendications 1 dans lequel la partie du corps (20) se trouvant à l'opposé de la surface (12) chauffante par rapport aux cavités est constituée d'un matériau non magnétique.

5. Dispositif selon la revendication 4 dans lequel chaque cavité est formée par l'association de deux rainures, une rainure étant formée dans une surface de la partie en matériau magnétique du corps et l'autre rainure étant formée dans une surface d'une autre partie du corps.

6. Dispositif selon la revendication 2, comportant des conduits (281, 282 ; 301, 302) pour la circulation d'un fluide de refroidissement entre les cavités et la surface chauffante.

7. Dispositif selon la revendication 2, dans lequel chaque inducteur présente une section inférieure à celle de la cavité de façon à ménager un espace annulaire (42) pour la circulation d'un fluide de refroidissement dans ledit espace.

8. Appareil pour le moulage ou la transformation d'une pièce, **caractérisé en ce qu'**il comporte deux dispositifs selon la revendication 1, superposés en un dispositif supérieur et un dispositif inférieur, dont les surfaces chauffantes sont en contact avec la pièce.

9. Appareil selon la revendication 8 dans lequel les alimentations des inducteurs des deux dispositifs sont distinctes.

10. Procédé de fabrication d'une pièce par moulage ou transformation au moyen d'un appareil selon la revendication 8, dans lequel la température de chauffage de la surface chauffante du dispositif supérieur est différente de la température de chauffage de la surface chauffante du dispositif inférieur.

## Patentansprüche

1. Induktive Heizvorrichtung der Oberfläche (12) einer Form, als Heizoberfläche bezeichnet, wobei die Heizoberfläche einer Fläche des in der Form umgewandelten Werkstücks (14) ihre Form verleiht, wobei die Form einen Körper (16) aufweist, der einen Teil (18) umfasst, der aus einem magnetischen und wärmeleitenden Material besteht, in welchem eine Vielzahl geschlossener und von der Heizoberfläche (12) beabstandeter Hohlräume (22, 62) ausgebildet ist, wobei jeder Hohlraum einen Induktor (24) umgibt, der von einer Wechselstromquelle mit einer Frequenz zwischen 100 kHz und 200 kHz elektrisch versorgt wird, **dadurch gekennzeichnet, dass** die durch Induktion auf den Wänden jedes Hohlraums erzeugte Wärme gemäß einer im Wesentlichen konischen Verteilerzone (34) durch Wärmeleitung in Richtung der Heizoberfläche (12) übertragen wird, wobei der Abstand zwischen jedem Hohlraum und der Abstand dieser Hohlräume in Bezug auf die Heizoberfläche derart ist, dass die Verteilerzonen (34) von zwei benachbarten Hohlräumen (22₁, 22₂) einen Schnittpunkt im Bereich der Heizoberfläche (12) derart bilden, dass die aus dieser Erwärmung resultierende Temperatur auf der Heizoberfläche im Wesentlichen einheitlich ist.

2. Vorrichtung nach Anspruch 1, umfassend Kühlmittel, um die Heizoberfläche (12) zu kühlen.

3. Vorrichtung nach Anspruch 1, wobei das magnetische und wärmeleitende Material Stahl aufweist.

4. Vorrichtung nach einem Ansprüch 1, wobei der Teil des Körpers (20), der sich gegenüber der Heizoberfläche (12) in Bezug auf die Hohlräume befindet, aus einem nicht magnetischen Material besteht.

5. Vorrichtung nach Anspruch 4, wobei jeder Hohlraum durch Kombination von zwei Rillen gebildet ist, wobei eine Rille in einer Oberfläche des Teils aus magnetischem Material des Körpers gebildet ist und die andere Rille in einer Oberfläche eines anderen Teils des Körpers gebildet ist.

6. Vorrichtung nach Anspruch 2, aufweisend Kanäle (281, 282; 301, 302) für die Zirkulation eines Kühlfluids zwischen den Hohlräumen und der Heizoberfläche.

7. Vorrichtung nach Anspruch 2, wobei jeder Induktor einen kleineren Querschnitt als der Hohlraum aufweist, so dass ein ringförmiger Raum (42) für die Zirkulation eines Kühlfluids in dem Raum ausgebildet wird.

8. Apparat für das Formen oder die Umwandlung eines Werkstücks, **dadurch gekennzeichnet, dass** er zwei Vorrichtungen nach Anspruch 1 aufweist, die als eine obere Vorrichtung und eine untere Vorrichtung übereinanderstehen, deren Heizoberflächen mit dem Werkstück im Kontakt sind.

9. Apparat nach Anspruch 8, wobei die Versorgungen der Induktoren der zwei Vorrichtungen verschieden sind.

10. Verfahren zur Herstellung eines Werkstücks durch Formen oder Umwandeln mit Hilfe eines Apparats nach Anspruch 8, wobei sich die Heiztemperatur der Heizoberfläche der oberen Vorrichtung von der Heiztemperatur der Heizoberfläche der unteren Vorrichtung unterscheidet.

## Claims

1. Device for heating by induction the surface (12) of a mold, referred to as heating surface, said heating surface conferring its form to a face of the part (14) transformed in the mold, said mold comprising a body (16) comprising a portion (18) made of a magnetic and heat conducting material wherein is arranged a plurality of closed cavities (22, 62) and remote from the heating surface(12), each cavity surrounding a field winding (24) electrically supplied by a source of alternating current at a frequency between 100 kHz and 200 KHz, **characterized in that** the heat produced by induction on the walls of each cavity being transferred by conduction according to a zone of diffusion (34) substantially tapered towards the heating surface (12), the distance between each cavity and the distance of these cavities with respect to the heating surface being such that the zones (34) of diffusion of two adjacent cavities (22₁, 22₂) form an intersection on the heating surface (12), in such a way that the temperature resulting from this heating is substantially uniform over said heating surface.

2. Device according to claim 1, comprising means of cooling in order to cool the heating surface (12).

3. Device according to claim 1 wherein the magnetic and heat conducting material comprises steel.

4. Device according to claims
1 wherein the portion of the body (20) opposite the heating surface (12) with respect to the cavities is made of a non-magnetic material.

5. Device according to claim 4 wherein each cavity is formed by the association of two grooves, one groove being formed in a surface of the portion made from magnetic material of the body and the other groove being formed in a surface of another portion of the body.

6. Device according to claim 2, comprising conduits (281, 282; 301, 302) for the circulation of a cooling fluid between the cavities and the heating surface.

7. Device according to claim 2, wherein each field winding has a section that is less than that of the cavity in such a way as to arrange an annular space (42) for the circulation of a cooling fluid in said space.

8. Apparatus for the molding or the transforming of a part, **characterized in that** it comprises two devices according to claim 1, superimposed as an upper device and a lower device, of which the heating surfaces are in contact with the part.

9. Apparatus according to claim 8 wherein the supplies of the field windings of the two devices are separate.

10. Method for manufacturing a part by molding or transforming by means of an apparatus according to claim 8, wherein the heating temperature of the heating surface of the upper device is different from the heating temperature of the heating surface of the lower device.
